# EUROPEAN PATENT APPLICATION

(11) **EP 4 438 171 A1**
(43) Date of publication of application: **02.10.2024**
(21) Application number: 24153845.3
(22) Date of filing: 25.01.2024
(51) Int. Cl.: B01J 21/18, B01J 23/42, B01J 35/45, B01D 53/86

(54) **CATALYST STRUCTURE FOR OXIDIZING HYDROGEN IN THE AIR AND DEVICE FOR OXIDIZING HYDROGEN**

(30) Priority: 31.03.2023 TW 112112502
(71) Applicant: Toplus Energy Corporation, Zhudong Township, Hsinchu County (TW)
(72) Inventor: YEN, Ming-Yu, Zhudong Township Hsinchu County (TW); TSAI, Ya-Ting, Zhudong Township Hsinchu County (TW); SHIH, Fu-Yang, Zhudong Township Hsinchu County (TW); CHANG, Hsu-Lin, Zhudong Township Hsinchu County (TW)
(74) Representative: van Dam, Vincent

(57) **Abstract**

Provided is a catalyst structure (10) for oxidizing hydrogen in the air, comprising: a base (11) and a catalyst layer (12), wherein the base (11) comprises a first surface (111), the catalyst layer (12) is disposed on the first surface (111) of the base (11), and the catalyst layer (12) comprises: a carbon carrier (121), multiple catalyst particles (122), and a fluorinated polymer (123); wherein the multiple catalyst particles (122) are disposed on a surface of the carbon carrier (121), and the carbon carrier (121) adheres to the first surface (111) through the fluorinated polymer (123). The present invention further provides a device for oxidizing hydrogen (1), comprising: the catalyst structure (10) and a shell (20), and the shell (20) comprises an accommodation space (201), wherein the catalyst structure (10) is disposed in the accommodation space (201).

## Description

The present invention relates to a catalyst structure, especially a catalyst structure for oxidizing hydrogen in the air and a device for oxidizing hydrogen comprising said catalyst structure.

In order to achieve the goal of net zero carbon dioxide emissions in 2050, the International Energy Agency (IEA) anticipates that there will be a significant adjustment and transformation in the energy structure, and among all kinds of energies, hydrogen energy is receiving more and more attention. While hydrogen can serve as a raw material for energy production, it can serve as an energy carrier as well. For example, when renewable energy sources generate excess electricity for energy supply and exceed demand, hydrogen can be used to store such excess electricity. In addition, during the production process of the integrated circuits (ICs), hydrogen may be used as a carrier gas, or hydrogen may be generated from the reactions in the manufacturing process. In other words, undesirable hydrogen may be generated in the IC manufacturing process.

As hydrogen has the disadvantage of being flammable and highly explosive, that is, hydrogen in a concentration of equal to or more than 4 volume percent in the air will explode upon the encounter with a fire source, hydrogen leak detectors are often provided to the places where there is a possibility of hydrogen leakage, such as the places where hydrogen is used or produced, etc. Therefore, when hydrogen leaks and exceeds the set safety value, the hydrogen leak detector will sound the alarm, and a series of safety measures may be initiated, for example, the operation of the equipment may be halted, people and flammable items may be evacuated from the warning area, the exhaust fan or natural convection may be initiated. When the hydrogen concentration in the environment drops and is lower than the set safety value, the suspended operation or the evacuated area may be available as usual again. Accordingly, one may find that current safety measures result in a huge waste of resources and time. Further, hydrogen tends to aggregate in dead corners or at the top of the space, and said natural convection or the exhaust fan may not warrant the concentration of hydrogen is low enough all over the warning area.

In order to solve the above problems, several studies on converting hydrogen into water to enhance safety have been proposed. For example, the electrical coupler heating method can increase the temperature by a thermal coupler to achieve the temperature required for hydrogen oxidation; or a catalyst, such as a palladium catalyst, can be used to convert hydrogen into water in the environment at a low oxygen concentration. While these methods can reduce the concentration of hydrogen in the space by converting hydrogen into water, they all require high temperatures. Further, said catalyst is usually sintered and fixed on a ceramic carrier. If the environment has high moisture, the ceramic carriers are prone to hydrolysis and collapse and result in a structural failure of the catalysts.

In view of the technical shortcomings of the technologies currently available, the purpose of the present invention is to provide a catalyst structure for oxidizing hydrogen in the air, wherein the catalyst structure can convert hydrogen in a non-high-temperature environment to reduce the concentration of hydrogen in the space.

Another purpose of the present invention is to provide a catalyst structure for oxidizing hydrogen in the air, which can effectively convert hydrogen in a high-moisture environment to reduce the concentration of hydrogen in the space.

To achieve the above purpose, the present invention provides a catalyst structure for oxidizing hydrogen in the air, comprising: a base and a catalyst layer, wherein the base comprises a first surface, the catalyst layer is disposed on the first surface of the base, and the catalyst layer comprises: a carbon carrier; multiple catalyst particles, comprising a platinum metal or a platinum alloy; and a fluorinated polymer; wherein the multiple catalyst particles are disposed on a surface of the carbon carrier, and the carbon carrier adheres to the first surface of the base through the fluorinated polymer.

According to the present invention, the catalyst structure for oxidizing hydrogen in the air can be installed in any place, for example, an office or a chamber. Therefore, the air indicates any gas, not limited to an ambient air. For example, the air may indicate a protective atmosphere in a chamber.

The present invention disperses and adheres the carbon carriers, which are disposed with platinum metals, to the base through the fluorinated polymers to obtain a stable catalyst structure with a strong antioxidant property. Further, the present invention uses the multiple catalyst particles, which comprise a platinum metal or a platinum alloy, to achieve the catalyst activation efficacy even in a non-high-temperature environment, such as 0°C to 100°C. Finally, the present invention uses the carbon carriers to avoid the problem that the ceramic carriers are vulnerable to the moisture. Therefore, the catalyst structure for oxidizing hydrogen in the air of the present invention can reduce the temperature requirement for hydrogen oxidation and enhance durability.

In some embodiments, the carbon carrier comprises carbon black, a carbon fiber, a carbon nanotube, active carbon, mesoporous carbon, a mesocarbon microbead, graphite, graphene or any combination thereof, but not limited thereto. Preferably, the carbon carrier is carbon black.

When the carbon carrier has multiple pores, the multiple catalyst particles can be disposed on the surface of the carbon carrier, and disperse in the pores as well. When the carbon carrier is in a powdery state, the multiple catalyst particles are disposed on the surface of each carbon carrier. Further, each carbon carrier in a powdery state can bind to one another by disposing the fluorinated polymer on the surface of the carbon carrier. In other words, the fluorinated polymer can cover part or all of the surface of the carbon carrier.

When the carbon carrier is in a powdery state, preferably, the carbon carrier has an average particle size of 10 nm to 100 nm, but not limited thereto. The average particle size refers to the particle size corresponding to a particle size that its cumulative particle size distribution percentage reaches 50%, which is D50. Preferably, the carbon carriers have an average particle size of 10 nm to 50 nm.

According to the present invention, the average particle size or D50 is obtained by scanning electron microscope (SEM).

According to the present invention, the multiple catalyst particles have an average particle size of 1 nm to 50 nm, but not limited thereto. The average particle size refers to D50. Preferably, the multiple catalyst particles have an average particle size of 2 nm to 10 nm.

In some embodiments, the multiple catalyst particles comprise a platinum alloy, wherein based on the total weight of the platinum alloy, the platinum is in an amount of 0.1 weight percent (wt%) to 99 wt%. Preferably, the platinum alloy indicates that the platinum is in an amount of 1 wt% to 50 wt%.

In some embodiments, the multiple catalyst particles further comprise a palladium (Pd) metal, a palladium alloy, a nickel (Ni) metal, a nickel alloy, a cobalt (Co) metal, a cobalt alloy, a ruthenium (Ru) metal, a ruthenium alloy or any combination thereof.

In some embodiments, the fluorinated polymer comprises, but not limited to, polytetrafluoroethene (PTFE), perfluorosulfonic acid resin (PFSA), (poly(vinylidene fluoride) (PVDF) or any combination thereof.

In some embodiments, based on a total amount of the carbon carrier and the multiple catalyst particles in the catalyst layer, the multiple catalyst particles are in an amount of 0.1 wt% to 90 wt%.

In some embodiments, based on a total amount of the carbon carrier and the multiple catalyst particles in the catalyst layer, the carbon carrier is in an amount of 10 wt% to 99.9 wt%.

In some embodiments, based on a total amount of the catalyst layer, the fluorinated polymer is in an amount of 0.1 wt% to 50 wt%.

In some embodiments, the base has a material comprising: an aluminum metal, an aluminum alloy, a copper metal, a copper alloy, a nickel metal, a nickel alloy, a stainless steel, a carbon material, a carbon fiber composite, a plastic, a glass fiber composite or any combination thereof, but not limited thereto. Specifically, the carbon fiber composite is a composite material of a carbon fiber and a macromolecule resin. The glass fiber composite is a composite material of a glass fiber and a macromolecule resin.

In some embodiments, the base has a geometric shape including a solid flat plate, a flat plate with multiple through holes, a wavy or zigzag shape, a fence shape, a grid shape, a honeycomb shape, a foam-like porous shape or any combination thereof. For example, the base can be a porous material or a material in a grid shape, for example, a nickel foam, an aluminum foam, a copper foam, a carbon foam or other porous materials. In some other embodiments, the base has two opposite ends that each further extend to form a wing structure for the fixation of the catalyst structure through a locking member. In one embodiment, the wing structure indicates a flat protrusion.

According to the present invention, the base comprises a first surface and a second surface opposite to the first surface. In some embodiments, only the first surface of the base is disposed with a catalyst layer. In some other embodiments, the second surface of the base is further disposed with another catalyst layer.

For example, the catalyst layer on the first surface of the base can be the same as said another catalyst layer on the second surface of the base. Alternatively, the catalyst layer on the first surface of the base can have a material the same as that of said another catalyst layer on the second surface of the base, but the catalyst layer and said another catalyst layer have different average thicknesses. In another alternative, the catalyst layer on the first surface of the base and said another catalyst layer on the second surface of the base have the same carbon carrier but different catalyst particles. In another alternative, the catalyst layer on the first surface of the base and said another catalyst layer on the second surface of the base have the same catalyst particles but different carbon carriers, but not limited thereto.

In some embodiments, the catalyst structure has an average thickness of 0.06 mm to 10.5 mm.

In some embodiments, the base has an average thickness of 0.05 mm to 10 mm.

According to the present invention, the thickness is obtained by a vernier caliper.

In some embodiments, the catalyst layer has an average thickness of 0.01 mm to 0.5 mm.

In some embodiments, the catalyst structure of the present invention can be installed directly to the place where hydrogen removal is required. For example, by means of a locking member, it can fix the two wing structures extending from the base of the catalyst structure to the wall, that is, the catalyst structure is disposed vertically to the ground. When the air passes through the catalyst structure, the catalyst structure initiates the reaction between the hydrogen and oxygen in the air to generate water.

Preferably, the catalyst structure of the present invention can be disposed in the environment at 0°C to 100°C to carry out hydrogen oxidation reaction to generate water, but not limited thereto.

Preferably, the present invention is suitable for treating the air with hydrogen in a volume concentration of less than 5% to convert the hydrogen thereof into water, thereby avoiding conflagration or explosion caused by the hydrogen in the air.

The present invention further provides a device for oxidizing hydrogen, comprising: at least one aforementioned catalyst structure; and a shell, comprising an accommodation space, a first air flow part and a second air flow part in gas communication with each other; wherein the accommodation space is inside the shell, the accommodation space has one end disposed with the first air flow part and another end disposed with the second air flow part, and the catalyst structure is disposed in the accommodation space and is between the first air flow part and the second air flow part.

In some embodiments, the at least one catalyst structure is multiple catalyst structures, and the multiple catalyst structures are spaced apart from each other. Specifically, the multiple catalyst structures can be spaced apart from each other and disposed in parallel. Alternatively, the multiple catalyst structures can be spaced apart from each other and disposed in a pattern of concentric circles.

In some embodiments, the at least one catalyst structure as a whole is in a spiral shape. That is, in a top view, at least one catalyst structure is winding in a continuous and gradually widening (or tightening) curve around a central point on a flat plane to show multiple loops. As the multiple loops are spaced apart from each other to form a channel, the air entering the channel will pass through the catalyst structure in a spiral pattern, and the time that the air comprising hydrogen stays in the catalyst structure is prolonged, so that the catalyst structure can consume more hydrogen, thereby removing hydrogen in the air more completely.

In some embodiments, the at least one catalyst structure as a whole in a spiral shape may be that the at least one catalyst structure is multiple catalyst structures; and the top view thereof shows that multiple separated sections are spaced apart from each other and disposed consecutively to form a spiral shape.

In some embodiments, one or more openings can be disposed only on both of the first air flow part and the second air flow part of the shell. Alternatively, the shell as a whole is in the shape of a fence, of a grid, or of a net. That is, multiple openings are disposed all over the shell.

In some embodiments, the air is introduced through the first air flow part to the accommodation space, and discharged from the second air flow part. For example, the flow direction of the air entering the first air flow part is the same as that of the air leaving the second air flow part. Alternatively, the flow direction of the air entering the first air flow part is perpendicular to that of the air leaving the second air flow part. In some other embodiments, the air carries out a two-way flow between the first air flow part and the second air flow part.

In some embodiments, the catalyst structure is detachably installed on the device for oxidizing hydrogen.

In some embodiments, the device for oxidizing hydrogen further comprises a thermochromic member, the thermochromic member is disposed on an outer surface of the shell, and the thermochromic member comprises a thermochromic dye. When the hydrogen in the air contacts the catalyst structure in the device for oxidizing hydrogen, the oxidation reaction of the hydrogen will increase the temperature of the device for oxidizing hydrogen, so that the thermochromic member can show a color change and indicates the oxidation reaction of the hydrogen.

In some embodiments, the device for oxidizing hydrogen further comprises a moisture sensing unit, the moisture sensing unit is disposed on an outer surface of the shell, and the moisture sensing unit comprises a dye that changes color after absorbing moistures. When the hydrogen in the air contacts the catalyst structure in the device for oxidizing hydrogen, the oxidation reaction of the hydrogen will generate moistures, so that the moisture sensing unit can show a color change and indicate the oxidation reaction of the hydrogen. Preferably, the moisture sensing unit is disposed on the top outer surface of the shell, and the top outer surface can be perpendicular to both the first air flow part and the second air flow part. Alternatively, the top outer surface can be part of the second air flow part. In other words, the moisture sensing unit is located on the top of the shell after the installation of the device for oxidizing hydrogen.

In some embodiments, the device for oxidizing hydrogen can be used with a hydrogen sensing unit, the hydrogen sensing unit is disposed outside the shell, and the hydrogen sensing unit comprises a dye that changes color after absorbing hydrogen. When hydrogen contacts the device for oxidizing hydrogen, the hydrogen sensing unit can show a color change and indicates the existence of hydrogen. Preferably, the hydrogen sensing unit is disposed correspondingly above the device for oxidizing hydrogen.

In some embodiments, hydrogen oxidation reaction is an exothermic reaction, so the device for oxidizing hydrogen can further comprise a temperature detector, and the temperature detector is disposed on an outer surface of the shell. If the temperature of the device for oxidizing hydrogen is too high, for example, higher than a preset temperature, a warning can be signaled.

In some embodiments, the device for oxidizing hydrogen is suitable for placing in a closed or semi-enclosed space where a small amount of hydrogen may be generated or leaked, such as lead-acid battery charging rooms, hydrogen bottle cabinets, or nuclear power plants, etc., but not limited thereto. For example, the device for oxidizing hydrogen is set in the upper part or in the upper layer of the aforementioned closed or semi-enclosed space.

In some embodiments, the device for oxidizing hydrogen further comprises a fixing component. The fixing component comprises a magnetic component, a buckle or a locking component, but is not limited thereto.

According to the present invention, the device for oxidizing hydrogen can be placed in an environment at a temperature of 0°C to 100°C, but not limited thereto.

In the drawings:
Fig. 1 is a schematic side cross-sectional view of the catalyst structure of Example 1.
Fig. 2 is a schematic diagram of the catalyst structure of Example 2.
Fig. 3 is a schematic perspective view of the device for oxidizing hydrogen of Example 3.
Fig. 4 is a schematic perspective view of the device for oxidizing hydrogen of Example 4.
Figure 5 is a schematic perspective view of the device for oxidizing hydrogen of Example 4 from another perspective.
Fig. 6 is a schematic perspective view of the device for oxidizing hydrogen of Example 5.

The present invention is further explained through the following embodiments. A person having ordinary skill in the art can easily understand the advantages and efficacies achieved by the present invention. The present invention should not be limited to the contents of the embodiments. A person having ordinary skill in the art can make some improvement or modifications which are not departing from the spirit and scope of the present invention to practice or apply the content of the present invention.

Several examples are listed below to illustrate the implementation of the present invention. In the description of the present invention, if the wordings, such as center, up, down, top, bottom, inside and outside, etc., which indicate the orientations or positional relationships according to the drawings are recited, such wordings simply facilitate describing the present invention, and do not manifest or imply that the device or component of the present invention requires specific orientations or shall be constructed and operated in a specific orientation.

### Example 1: The catalyst structure

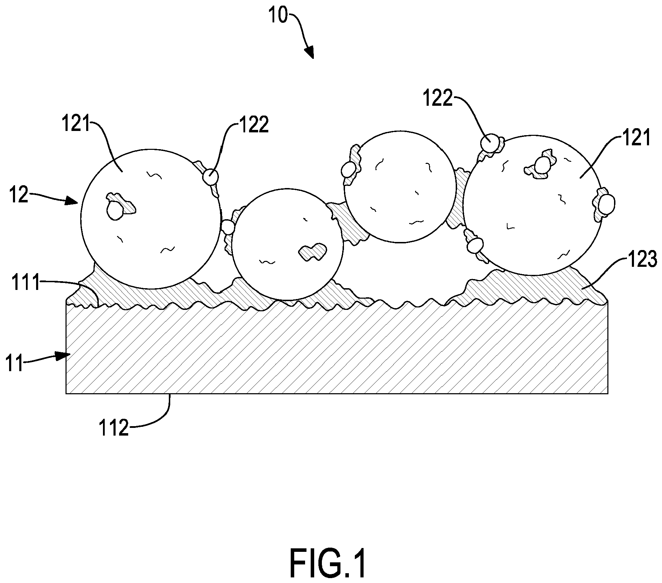

As shown in Fig. 1, the catalyst structure 10 of the present example comprises a single catalyst layer 12. That is, the catalyst structure 10 comprises a base 11 and a catalyst layer 12, the base 11 comprises a first surface 111 and a second surface 112, and the catalyst layer 12 is disposed on the first surface 111 of the base 11. The catalyst layer 12 comprises a carbon carrier 121, multiple catalyst particles 122, and a fluorinated polymer 123; wherein the multiple catalyst particles 122 are disposed on a surface of the carbon carrier 121, and the fluorinated polymer 123 covers part of the surface of the carbon carrier 121.

The base 11 is made of a glass fiber composite, and has an average thickness of 0.2 mm. The catalyst layer 12 has an average thickness of 0.05 mm. In the catalyst layer 12, the carbon carrier 121 is made of carbon black in a powdery state, and the carbon black has an average particle size of 30 nm. The multiple catalyst particles 122 comprise a platinum metal, and the multiple catalyst particles 122 have an average particle size of less than 10 nm. The fluorinated polymer 123 is PFSA. The fluorinated polymer 123 covers the surface of the carbon carrier 121 in a powdery state, so that each carbon carrier 121 in a powdery state can bind to each other and adhere to the first surface 111 of the base 11.

### Example 2: The catalyst structure

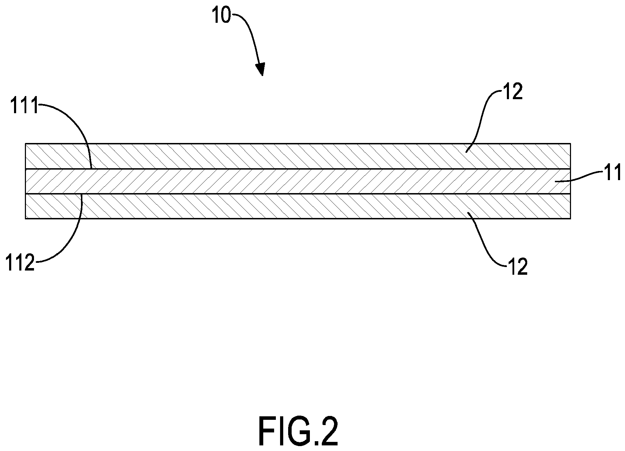

The catalyst structure 10 of the present example comprises a base 11 and two catalyst layers 12. Specifically, as shown in Fig. 2, the catalyst structure 10 comprises the base 11 in a flat-plate shape and two catalyst layers 12. The base 11 comprises a first surface 111 and a second surface 112 opposite to each other, wherein a catalyst layer 12 is disposed on the first surface 111 of the base 11, and another catalyst layer 12 is disposed on the second surface 112 of the base 11. That is, the base 11 is sandwiched between the two catalyst layers 12. The two catalyst layers 12 have the same material and average thickness. Further, both the material and the average thickness of the base 11 of the present example are the same as those of the base 11 in Example 1, and both the material and the average thickness of the two catalyst layers 12 of the present example are the same as those of the catalyst layer 12 in Example 1.

### Example 3: The device for oxidizing hydrogen

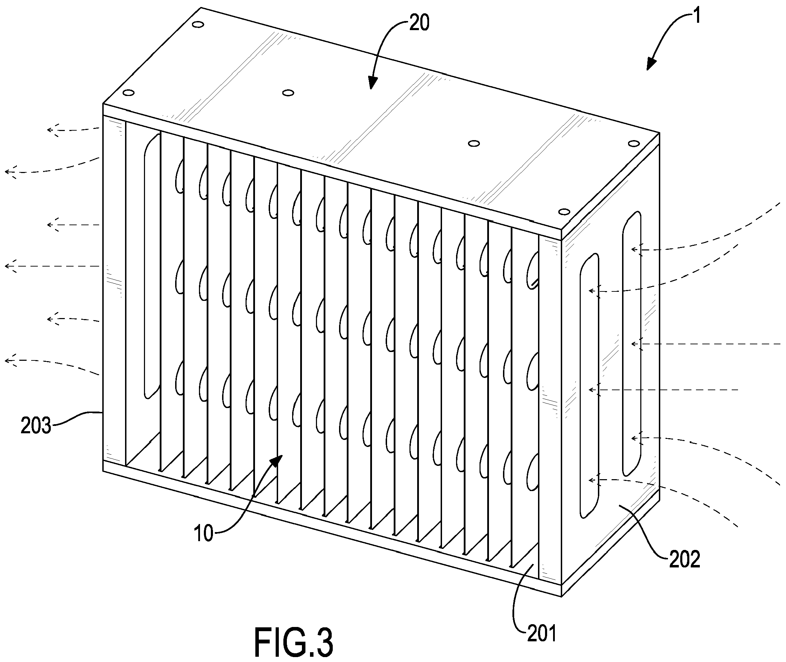

As shown in Fig. 3, the device for oxidizing hydrogen 1 of the present example comprises multiple sheets of the catalyst structure 10 and a shell 20 in the shape of a box; the shell 20 comprises an accommodation space 201, a first air flow part 202 and a second air flow part 203 in gas communication with each other. The accommodation space 201 is inside the shell 20. The first air flow part 202 and the second air flow part 203 are respectively disposed on two opposite ends of the accommodation space 201 one on one. The multiple sheets of the catalyst structure 10 are inserted into the accommodation space 201, and are between the first air flow part 202 and the second air flow part 203.

Further, each of the first air flow part 202 and the second air flow part 203 has two elongated openings. Each sheet of the catalyst structure 10 of the present example has the same material as that of the catalyst structure 10 of Example 2. The only difference between the catalyst structure 10 in Example 2 and Example 3 is that each of the multiple sheets of the catalyst structure 10 in the device for oxidizing hydrogen 1 of the present example further comprises multiple through holes, and the multiple sheets of the catalyst structure 10 comprise 0.672 grams of a platinum metal in total. Further, each of the multiple sheets of the catalyst structure 10 is in a flat-plate shape, spaced apart from each other, and disposed in parallel. Finally, as each of the multiple sheets of the catalyst structure 10 in a flat-plate shape comprises multiple through holes, the air comprising hydrogen, which enters the device for oxidizing hydrogen 1 from the first air flow part 202, can maintain a consistent air flow direction through the multiple sheets of the catalyst structure 10 in a flat-plate shape, and leaves the device for oxidizing hydrogen 1 from the second air flow part 203, wherein the hydrogen oxidation reaction is carried out upon the contact between the hydrogen and the multiple sheets of the catalyst structure 10, thereby reducing the amount of hydrogen in the air.

### Test for hydrogen oxidation

Comparative example 1 (CE1): A hydrogen concentration detector with a detection limit of 10,000 ppm was put in a space where the environment has a temperature of 10°C to 15°C and does not comprise hydrogen. Subsequently, a hydrogen gas was introduced into the space at an air flow rate of 1.2 liters of hydrogen per minute (1.2 L/min). After the hydrogen gas had been introduced for 320 seconds, the hydrogen concentration in the space reached the detection limit (10,000 ppm).

For comparison, the device for oxidizing hydrogen of Example 3 was put in the space where the environment has a temperature of 10°C to 15°C and does not comprise hydrogen. That is, the space of the present example is the same as that of CE1. Similarly, a hydrogen gas was introduced into the space in the way the same as that of CE1. After the hydrogen gas had been introduced for 370 seconds, the hydrogen concentration in the space was 8150 ppm, which was the highest concentration and reduced afterwards. After the hydrogen gas had been introduced for 900 seconds, the hydrogen concentration reached equilibrium and stayed at 4500 ppm. From above, the device for oxidizing hydrogen of the present invention indeed oxidized hydrogen in a non-high-temperature environment, such as room temperature, to reduce the concentration of hydrogen in the space.

### Example 4: The device for oxidizing hydrogen

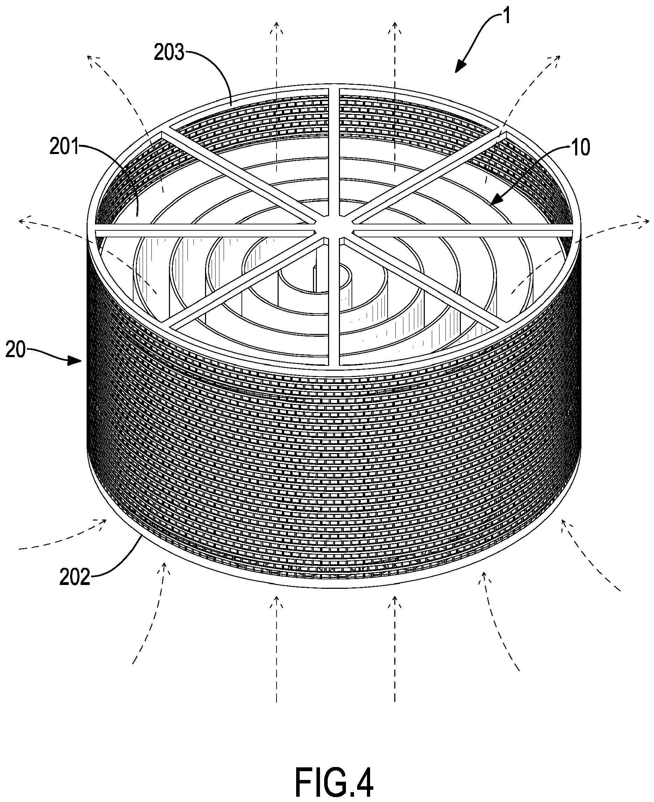

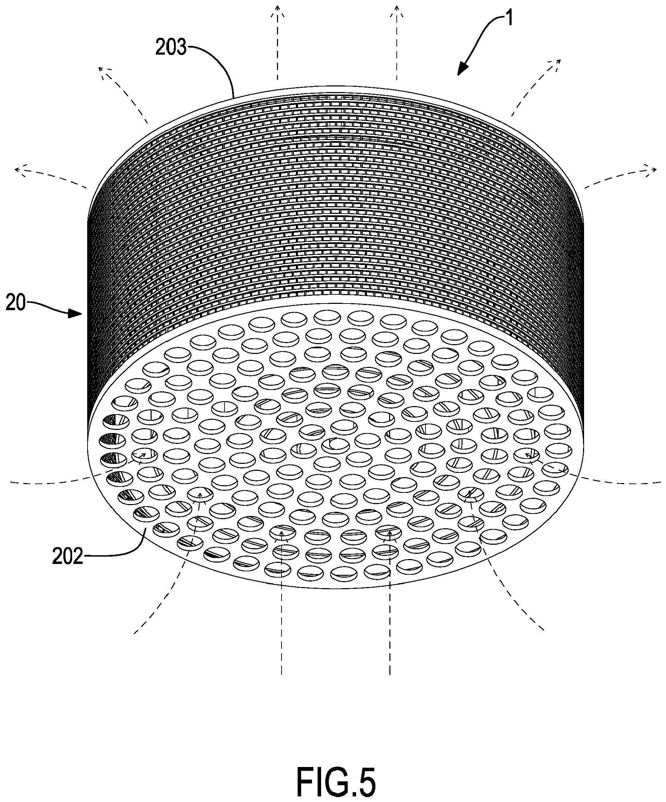

As shown in Fig. 4 and Fig. 5, the device for oxidizing hydrogen 1 of the present example comprises a catalyst structure 10 and a shell 20. The shell 20 is formed into a hollow cylinder with (1) a meshed outer circumferential surface, (2) a hollow top surface, which is the second air flow part 203 and is perpendicular to the meshed outer circumferential surface, (3) a bottom surface, which is the first air flow part 202 and has multiple circular holes, and (4) a meshed inner circumferential surface surrounding the accommodation space 201. That is, the shell 20 comprises the accommodation space 201, the first air flow part 202 and the second air flow part 203 in gas communication with each other. The accommodation space 201 is inside the shell 20. The first air flow part 202 and the second air flow part 203 are respectively disposed on two opposite ends of the accommodation space 201 one on one. The catalyst structure 10 is disposed in the accommodation space 201, and is between the first air flow part 202 and the second air flow part 203.

The catalyst structure 10 is in the form of a thin sheet and further curls in a spiral shape as a whole to show multiple loops in a top view, wherein each of the multiple loops is spaced apart from each other to form an air flow channel for the air comprising hydrogen. Finally, the catalyst structure 10 of the present example has the same material as that of Example 2.

### Example 5: The device for oxidizing hydrogen

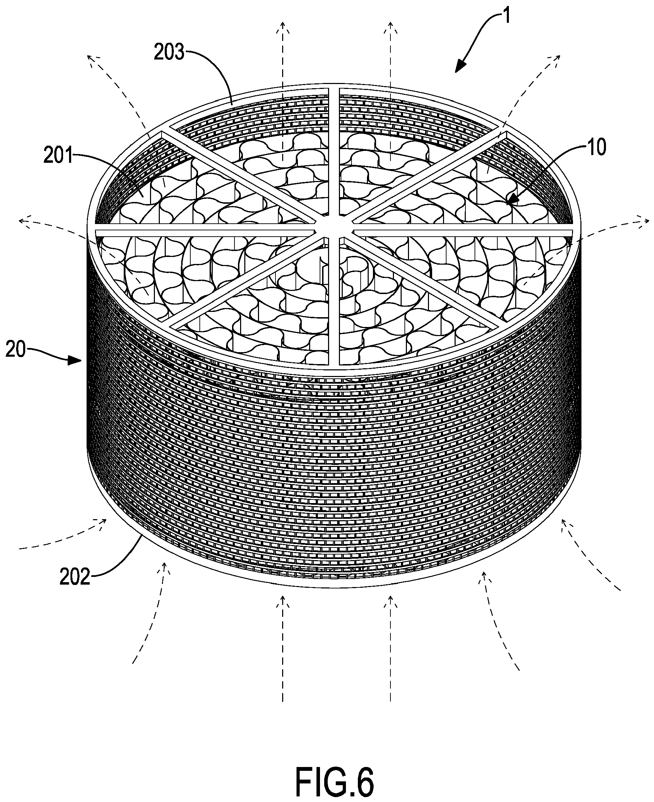

As shown in Fig. 6, the device for oxidizing hydrogen 1 of the present example comprises a shell 20 and two catalyst structures 10. The devices for oxidizing hydrogen 1 of both the present example and Example 4 are similar as follows: (1) both Example 4 and Example 5 have the same shell 20, and (2) the catalyst structures 10 of both Example 4 and Example 5 curl in a spiral shape as a whole, are disposed in the accommodation space 201, and have the same material. The main difference between Example 4 and Example 5 is that Example 5 has two catalyst structures 10, and Example 4 only has one catalyst structure 10, wherein one of the two catalyst structures 10 of Example 5 has the same geometric structure as that of Example 4, which is a thin sheet, and another one of the two catalyst structures 10 of Example 5 has a different geometric structure from that of Example 4.

Specifically, said another one catalyst structure 10 is in the form of a thin corrugated plate, and is inserted into the interval within the spiral shape of the catalyst structure 10 in the form of a thin sheet. That is, in a top view, the catalyst structure 10 in the form of a thin sheet shows multiple loops, wherein each of the multiple loops is spaced apart from each other to form a channel, and said another one catalyst structure 10 in the form of a thin corrugated plate is inserted into the interval of two adjacent loops, or is disposed along the channel in the spiral shape of the catalyst structure 10 in the form of a thin sheet.

To sum up, the catalyst structure of the present invention indeed oxidizes hydrogen in a non-high-temperature environment, such as room temperature, to reduce the concentration of hydrogen in the space where the catalyst structure is provided, so that the potential risk of hydrogen explosion can be removed to ensure the safety of the space. Further, the catalyst structure of the present invention uses a carbon carrier, not the conventional ceramic carrier, to prevent the catalyst structure from being jeopardized by the moisture, thereby reducing the temperature requirement for hydrogen oxidation and improving moisture resistance of the catalyst structure to achieve better durability. Accordingly, the device for oxidizing hydrogen comprising the catalyst structure can be applied to various environments and spaces, and has greater development potential for a commercial product.

## Claims

1. A catalyst structure (10) for oxidizing hydrogen in the air, **characterized by** comprising:
a base (11), comprising a first surface (111); and
a catalyst layer (12), disposed on the first surface (111) of the base (11);
wherein the catalyst layer (12) comprises:
a carbon carrier (121);
multiple catalyst particles (122), comprising a platinum metal or a platinum alloy; and
a fluorinated polymer (123);
wherein the multiple catalyst particles (122) are disposed on a surface of the carbon carrier (121), and the carbon carrier (121) adheres to the first surface (111) of the base (11) through the fluorinated polymer (123).

2. The catalyst structure (10) as claimed in Claim 1, **characterized in that** the multiple catalyst particles (122) have an average particle size of 1 nm to 50 nm.

3. The catalyst structure (10) as claimed in Claim 1 or 2, **characterized in that** the multiple catalyst particles (122) further comprise a palladium metal, a palladium alloy, a nickel metal, a nickel alloy, a cobalt metal, a cobalt alloy, a ruthenium metal, a ruthenium alloy or any combination thereof.

4. The catalyst structure (10) as claimed in any one of Claims 1 to 3, **characterized in that** the carbon carrier (121) comprises carbon black, a carbon fiber, a carbon nanotube, active carbon, mesoporous carbon, a mesocarbon microbead, graphite, graphene or any combination thereof.

5. The catalyst structure (10) as claimed in any one of Claims 1 to 4, **characterized in that** based on a total amount of the carbon carrier (121) and the multiple catalyst particles (122) in the catalyst layer (12), the multiple catalyst particles (122) are in an amount of 0.1 weight percent to 90 weight percent.

6. The catalyst structure (10) as claimed in any one of Claims 1 to 5, **characterized in that** the base (11) has a geometric shape including a solid flat plate, a flat plate with multiple through holes, a wavy or zigzag shape, a fence shape, a grid shape, a honeycomb shape, a foam-like porous shape or any combination thereof.

7. The catalyst structure (10) as claimed in any one of Claims 1 to 5, **characterized in that** the base (11) has a material comprising: an aluminum metal, an aluminum alloy, a copper metal, a copper alloy, a nickel metal, a nickel alloy, a stainless steel, a carbon material, a carbon fiber composite, a plastic, a glass fiber composite or any combination thereof.

8. The catalyst structure (10) as claimed in Claim 7, **characterized in that** the carbon fiber composite is a composite material of a carbon fiber and a macromolecule resin, and/or the glass fiber composite is a composite material of a glass fiber and a macromolecule resin.

9. The catalyst structure (10) as claimed in any one of Claims 1 to 8, **characterized in that** the base (11) comprises a second surface (112) opposite to the first surface (111), the second surface (112) is disposed with another catalyst layer (12), and both the catalyst layer (12) on the first surface (111) and said another catalyst layer (12) on the second surface (112) comprise the same materials.

10. A device for oxidizing hydrogen (1), **characterized by** comprising:
at least one catalyst structure (10) as claimed in any one of Claims 1 to 9; and
a shell (20), comprising an accommodation space (201), a first air flow part (202) and a second air flow part (203) in gas communication with each other;
wherein the accommodation space (201) is inside the shell (20),
the accommodation space (201) has one end disposed with the first air flow part (202) and another end disposed with the second air flow part (203), and
the at least one catalyst structure (10) is disposed in the accommodation space (201) and is between the first air flow part (202) and the second air flow part (203).

11. The device for oxidizing hydrogen (1) as claimed in Claim 10, **characterized in that** the at least one catalyst structure (10) is multiple catalyst structures (10) and the multiple catalyst structures (10) are spaced apart from each other.

12. The device for oxidizing hydrogen (1) as claimed in Claim 10 or 11, **characterized in that** the at least one catalyst structure (10) is in a spiral shape.

13. The device for oxidizing hydrogen (1) as claimed in any one of Claims 10 to 12, **characterized in that** the device for oxidizing hydrogen (1) further comprises a thermochromic member, the thermochromic member is disposed on an outer surface of the shell (20), and the thermochromic member comprises a thermochromic dye.

14. The device for oxidizing hydrogen (1) as claimed in any one of Claims 10 to 13, **characterized in that** the device for oxidizing hydrogen (1) further comprises a moisture sensing unit, the moisture sensing unit is disposed on an outer surface of the shell (20), and the moisture sensing unit comprises a dye that changes color after absorbing moistures.
